Europäisches Patentamt

(19) European Patent Office

Office européen des brevets

(11) Veröffentlichungsnummer : **0 359 012 B1**

(12) **EUROPÄISCHE PATENTSCHRIFT**

(45) Veröffentlichungstag der Patentschrift :
22.01.92 Patentblatt 92/04

(51) Int. Cl.⁵ : **B29C 45/40**

(21) Anmeldenummer : **89115783.6**

(22) Anmeldetag : **26.08.89**

(54) **Kunststoff-Spritzgiessmachine mit Sortiereinrichtung zum Aussortieren nicht brauchbarer Spritzteile.**

(30) Priorität : **13.09.88 DE 3831129**

(43) Veröffentlichungstag der Anmeldung :
**21.03.90 Patentblatt 90/12**

(45) Bekanntmachung des Hinweises auf die
Patenterteilung :
**22.01.92 Patentblatt 92/04**

(84) Benannte Vertragsstaaten :
**AT CH DE ES FR GB IT LI NL**

(56) Entgegenhaltungen :
**DE-A- 3 444 208**

(73) Patentinhaber : **Hehl, Karl
Arthur-Hehl-Strasse 32
W-7298 Lossburg 1 (DE)**

(72) Erfinder : **Hehl, Karl
Arthur-Hehl-Strasse 32
W-7298 Lossburg 1 (DE)**

(74) Vertreter : **Mayer, Friedrich, Dr.
Patentanwälte Dr. Mayer & Frank Westliche 24
W-7530 Pforzheim (DE)**

## Beschreibung

Die Erfindung bezieht sich auf eine Kunststoff-Spritzgießmaschine entsprechend dem Oberbegriff des Patentanspruches 1.

Bei einer bekannten Kunststoff-Spritzgießmaschine dieser Art (DE-OS 3637612) sind zwar Transportband und Zerkleinerungseinrichtung als gesonderte bauliche Einheiten aus der Spritzgießmaschine herausnehmbar. Die Funktionselemente der Sortiereinrichtung sind jedoch einzeln und fest in das Maschinengestell integriert, was insbesondere bei Kunststoff-Spritzgießmaschinen kleiner Bauart in den beschränkten räumlichen Verhältnissen zwischen der Spritzgießform und der Zerkleinerungseinrichtung begründet ist. Die Angüsse müssen horizontal transportiert werden, um in das Schneidwerk zu gelangen. Es ist auch bekannt, die zeitlich voneinander getrennt ausgeworfenen Spritzteile einerseits und Angußteile sowie Schlechtteile andererseits mittels einer Sortierklappe in verschiedene Sammelbehälter zu lenken, deren Antriebseinrichtung fest in die Spritzgießmaschine eingebaut ist (DE-OS 3126520), dabei übt die Sortierklappe lediglich in einer Leitrichtung eine Leitfunktion aus. Dabei beanspruchen Sortiereinrichtung und Sammelbehälter den gesamten Raum unterhalb der Spritzgießform.

Bei einer weiteren bekannten Spritzgießmaschine (US-PS 3,776,675) beansprucht die Sortiereinrichtung ebenfalls den gesamten Raum im Maschinengestell unter der Spritzgießform. Die Leitklappe steuert die Spritzteile einerseits und die Angüsse andererseits über Schrägflächen unmittelbar aus dem Maschinengestell heraus.

Es ist auch bekannt (US-PS 4,608,008) ein Transportband mit Rahmen und Antriebseinrichtung als eine aus dem Maschinenständer herausnehmbare Einheit auszubilden und derart anzuordnen, daß die Spritzteile parallel zur Symmetrieebene der Spritzgießmaschine stirnseitig aus dem Maschinenständer heraustransportiert werden können. Dabei ist jedoch eine Absonderung nicht brauchbarer Teile weder vorgesehen noch möglich.

Bei einer verhältnismäßig großen Spritzgießmaschine vergleichbarer Art fallen die nicht brauchbaren Spritzteile und die brauchbaren Spritzteile in räumlich voneinander getrennten Bereichen aus der Spritzgießform aus (US-PS 4,321,027 — Sp.1, Zn. 18-29 und Sp. 2, Zn. 32-38). Die nicht brauchbaren Spritzteile fallen in eine aus dem Maschinenständer herausfahrbare Zerkleinerungseinrichtung.

Der Erfindung liegt die Aufgabe zugrunde, eine Kunststoff-Spritzgießmaschine der im Oberbegriff des Patentanspruches 1 genannten Art so weiterzubilden, daß den unterschiedlichen finanziellen Möglichkeiten und den unterschiedlichen Fertigungsverfahren der potentiellen Kunden besser Rechnung getragen werden kann, indem Kunststoff-Spritzgießmaschinen verschiedener Automatisierungsstufen rationell gefertigt werden können, welche ohne großen Montageaufwand ineinander überführbar sind.

Diese Aufgabe wird durch die im Patentanspruch 1 genannten Merkmale gelöst.

Bei einer solchen Ausbildung ist die Handhabung der Maschine wesentlich vereinfacht : Ist nämlich der Spritzbetrieb auf die Herstellung von Spritzteilen anderer Gestalt bzw. anderer Farbe, Härte, Zähigkeit und dergleichen umzustellen und aus diesem Grunde ein entsprechendes anderes Schneidwerk oder eine Säuberung des Schneidwerkes erforderlich, so braucht nicht mehr die ganze Zerkleinerungseinrichtung, sondern nur noch das Schneidwerk mit extrem geringem Arbeitsaufwand aus dem Maschinenständer herausgenommen werden. Dies gilt auch für den Reparaturfall.

Bei einer solchen Ausbildung ist es zudem möglich, insbesondere auch bei kleinen Spritzgießmaschinen die Sortiereinrichtung, das Transportband und die Zerkleinerungseinrichtung derart räumlich in den Maschinenständer einzuordnen, daß für die jeweiligen Spritzteile je nach deren Gestalt, Härte und Zähigkeit spezifisch geeignete Schneidwerke, zum Beispiel auch relativ niedrigtourige mit großer axialer Baulänge eingesetzt werden können, weil der Antriebsmotor außerhalb der Vertikalprojektion des Schneidwerkes liegt.

Durch die Ausbildung der Sortiereinrichtung und des Schneidwerkes je als eine aus dem Maschinenständer herausnehmbare Einheit können die Betriebsausfallzeiten durch rasche Auswechslung wesentlich verringert werden. Zudem kann sich ein Kunde mit relativ geringer finanzieller Ausstattung zum Beispiel zunächst eine Kunststoff-Spritzgießmaschine niedrigster Automatisierungsstufe, also ohne Sortiereinrichtung, Transporteinrichtung und Zerkleinerungseinrichtung mit bloßem Auffangbehälter anschaffen, um diese Maschine später nacheinander je nach seinen weiteren finanziellen Möglichkeiten und Bedürfnissen mit den genannten Einrichtungen auszurüsten.

So kann der Kunde z.B. mit steigenden Automatisierungsgraden unterschiedliche Arbeitsverfahren anwenden. a) Ohne Sortiereinheit und Schneidwerk : Einfaches Sammeln der unsortierten Spritzteile in einem Behälter ; Heraustransportieren der anfallenden unsortierten Spritzteile mit Hilfe eines Förderbandes. b) Ohne Schneidwerk : Sortieren der Spritzteile mittels Sortiereinheit und Heraustransportieren der brauchbaren Spritzteile mittels Förderband sowie Sammeln der nicht brauchbaren Spritzteile und der Angüsse in einem Behälter. c) Mit Sortiereinheit, Transportband und Schneidwerk : Sortieren der Spritzteile und Heraustransportieren der

2

brauchbaren Spritzteile sowie Zerkleinern der nicht brauchbaren Spritzteile und der Angüsse.

Bei der erfindungsgemäßen Lösung ergeben sich aber auch Vorteile in der Fertigung. So liegen die prinzipiellen Voraussetzungen dafür vor, daß die Sortiereinheit als funktionelle Einheit vor Einfügen in den Maschinenständer oder im Wartungsfalle bzw. im Reparaturfalle außerhalb der Kunststoff-Spritzgießmaschine auf Funktionsfähigkeit überprüfbar ist.

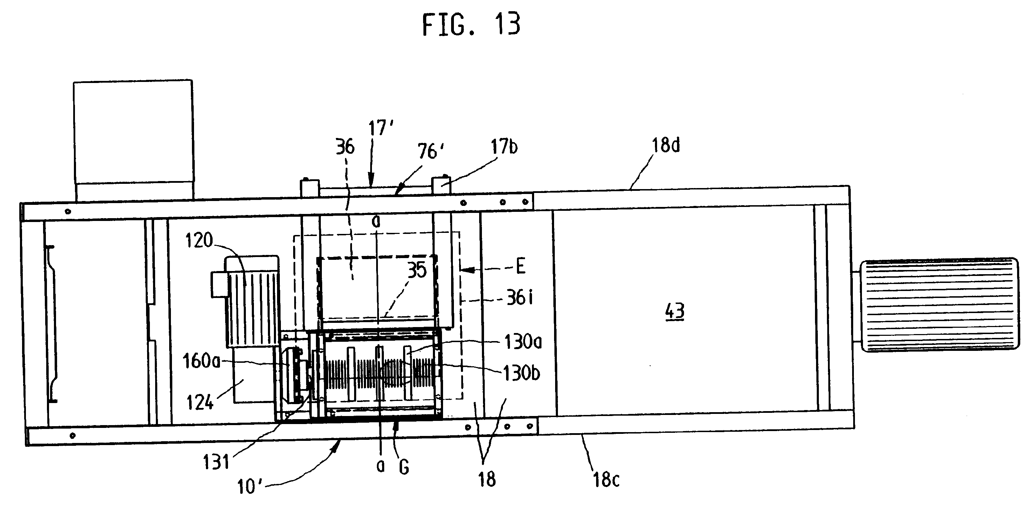

Zudem ist bei Montage der funktionsfähigen Sortiereinheit außerhalb der Spritzgießmaschine und bei einem anschließenden Einfügen in den Maschinenständer der Montageaufwand insgesamt geringer im Vergleich zu einem Fertigungsverfahren, bei welchem die Bauteile der Sortiereinrichtung im wesentlichen einzeln in den Maschinenständer einzubauen sind. Schließlich kann die Sortiereinheit bei geringem Montageaufwand auch derart wahlweise im Maschinenständer angeordnet werden, daß die Schwenkachse der Sortiereinheit senkrecht zur Symmetrieebene der Spritzgießmaschine oder parallel zu dieser verläuft (Fig. 13).

Bei einer Weiterbildung nach Anspruch 2 liegen die prinzipiellen Voraussetzungen für eine raumsparende Zuordnung des Schneidwerkes zur Sortiereinheit vor. Schlechtteile und Angüsse fallen ohne vorherigen Quertransport unmittelbar in das Schneidwerk. Dadurch ist ein einfacher raumsparender Aufbau des Schneidwerkes möglich. Eine automatische Kupplung zwischen Schneidwerk und Motor-Getriebe-Einheit ist gewährleistet. Eine Weiterbildung nach den Ansprüchen 3 und 4 gewährleistet einen stabilen Aufbau der Zerkleinerungseinrichtung aus zwei je einzeln aus dem Maschinenständer herausnehmbaren bzw. herauslösbaren Einheiten, die durch das bloße Einfahren bzw. Ausfahren der einen Einheit (Schneidwerk) miteinander kuppelbar sind.

Nach Anspruch 5 können je nach Gestalt und Kunststoffart besonders schwer zu zerkleinernde Spritzteile relativ geräuscharm zermahlen werden. Bei einer weiteren Ausgestaltung nach den Ansprüchen 6 und 7 ist die vom Maschinenständer relativ leicht lösbare Sortiereinheit besonders rationell zu fertigen. Sie kann zudem im Maschinenständer in unterschiedlichen Arbeitspositionen angeordnet werden.

Bei einer Ausbildung nach Anspruch 8 ergibt sich eine besonders raumsparende Anordnung von Sortiereinheit, Transportband und Zerkleinerungseinrichtung bei einem Austrag der brauchbaren Spritzteile durch die stirnseitige Wandung des Maschinenständers.

Bei einer Ausgestaltung nach Anspruch 9 kann das Transportband bei herausgenommenem Schneidwerk parallel zur Symmetrieebene der Spritzgießmaschine derart verschoben werden, daß die aus der Spritzgießform fallenden Spritzteile über einen durch Leitbleche begrenzten Fallschacht unmittelbar auf die Förderfläche des Transportbandes gelangen.

Bei einer weiteren Ausgestaltung nach Anspruch 10 können Sortiereinheit, Transportband und Zerkleinerungseinrichtung derart angeordnet sein, daß die brauchbaren Spritzteile einerseits und die nicht brauchbaren Spritzteile sowie die Angüsse andererseits je in eine Richtung gesteuert werden, die senkrecht zur Symmetrieebene der Spritzgießmaschine verläuft, wobei die Schneidwerkachse parallel zu dieser Symmetrieebene liegt. Dadurch kann dem Wunsch eines Kunden nach einem seitlichen Austrag der Spritzteile Rechnung getragen werden.

Nachstehend wird die Erfindung anhand der Zeichnung an zwei Ausführungsbeispielen beschrieben. Es zeigen :

| Figur 1 | Die schematisch dargestellte Kunststoff-Spritzgießmaschine in Seitenansicht, |
| Figur 2 | die Spritzgießmaschine gemäß Figur 1 in Rückansicht ohne Transportband, |
| Figur 3 | die Spritzgießmaschine im horizontalen Schnitt nach Linie III-III von Figur 1, |
| Figur 4 | einen Ausschnitt aus Figur 1 in vergrößerter Darstellung, |
| Figur 5 | einen Ausschnitt aus Figur 2 bei vom Antriebsmotor abgekuppeltem Schneidwerk in vergrößerter Darstellung, |
| Figur 6, 7 | Schnitte nach Linie VI-VI von Figur 8 bei in Schlechtteilposition bzw. in Gutteilposition befindlicher Sortiereinheit, |
| Figur 8 | einen Schnitt nach Linie VIII-VIII von Figur 1 in vergrößerter Darstellung, |
| Figur 9 | einen Ausschnitt aus Figur 8 bei teilweise aufgeschnittenem Gehäuse der Sortiereinheit, |
| Figur 10 | das Schneidwerk der Zerkleinerungseinrichtung mit teilweisem horizontalen Schnitt durch die Schneidwerkachse, |
| Figur 11 | den aufgeschnittenen Motor-Getriebe-Block in einer Darstellung gemäß Figur 5, |
| Figur 12 | die Motor-Getriebe-Einheit der Zerkleinerungseinrichtung in Draufsicht und |
| Figur 13 | ein weiteres Ausführungsbeispiel einer Anordnung von Sortiereinheit, Förderband und Zerkleinerungseinheit. |

Der die Spritzgießmaschine S aufnehmende Maschinenständer M aus Stahlblech hat ein U-förmiges Querschnittsprofil. Seine vertikalen U-Schenkel bilden die Längswände 18c, 18d, welche mit eingebördelten Rändern 18e versehen sind. Letztere sind mit Schienen 33 armiert. Unbrauchbare Spritzteile, die vom Rechner der Spritzgießmaschine durch Überschreitung des Grenzwertes eines oder mehrerer Fertigungsparameter als solche erkannt sind, werden im folgenden als 'Schlechtteile' bezeichnet.

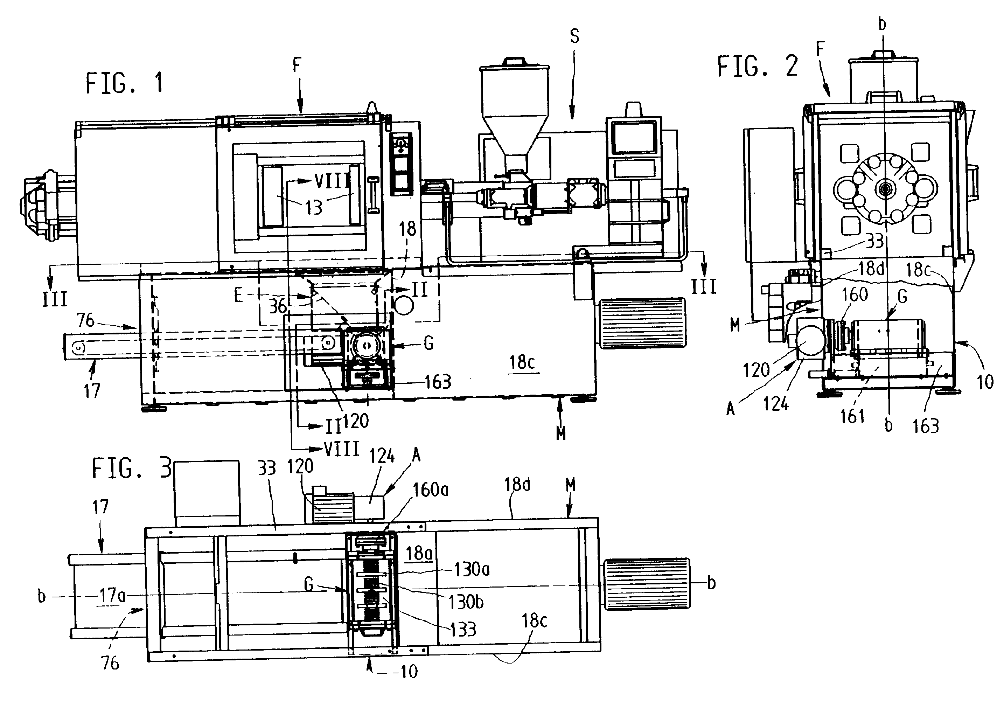

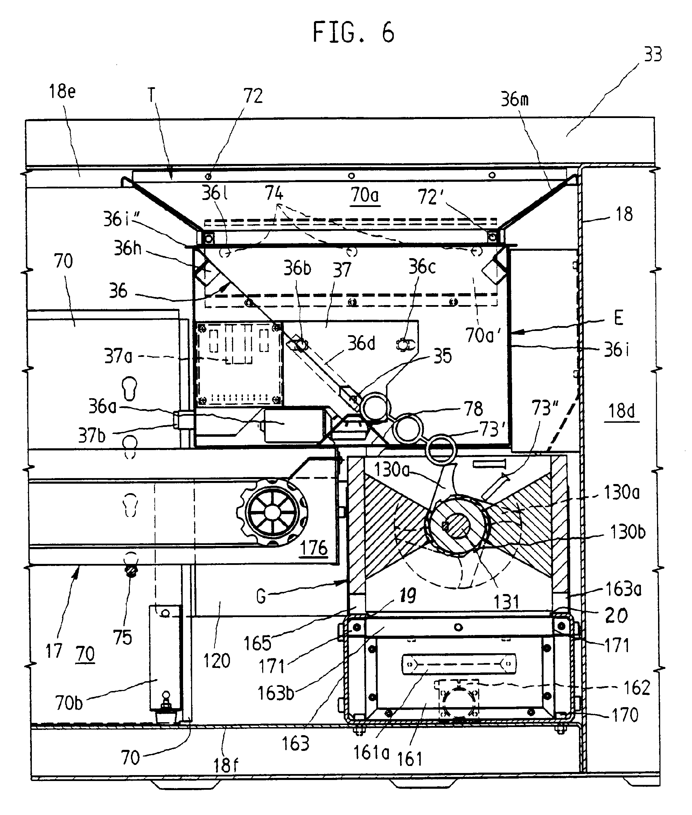

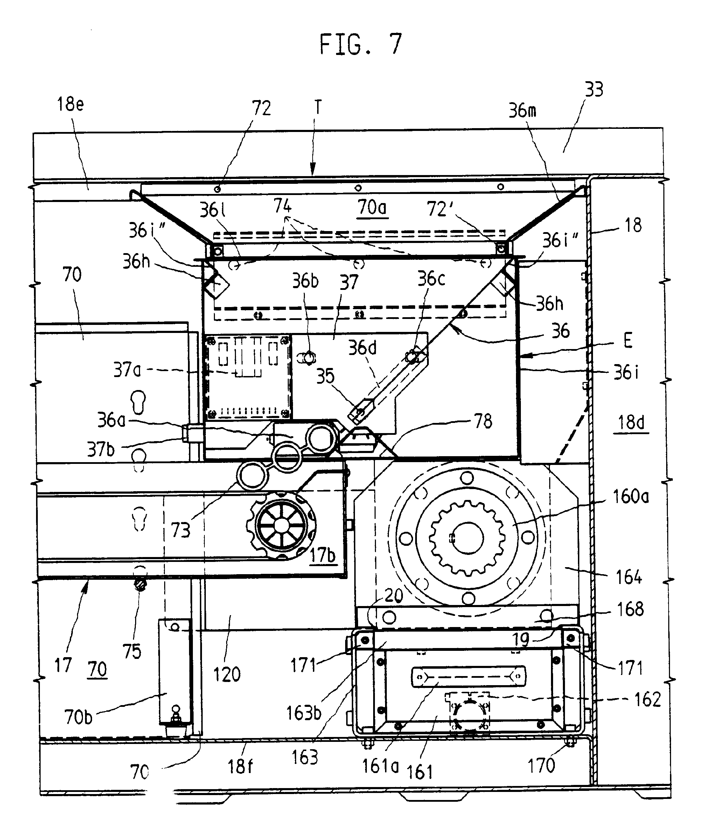

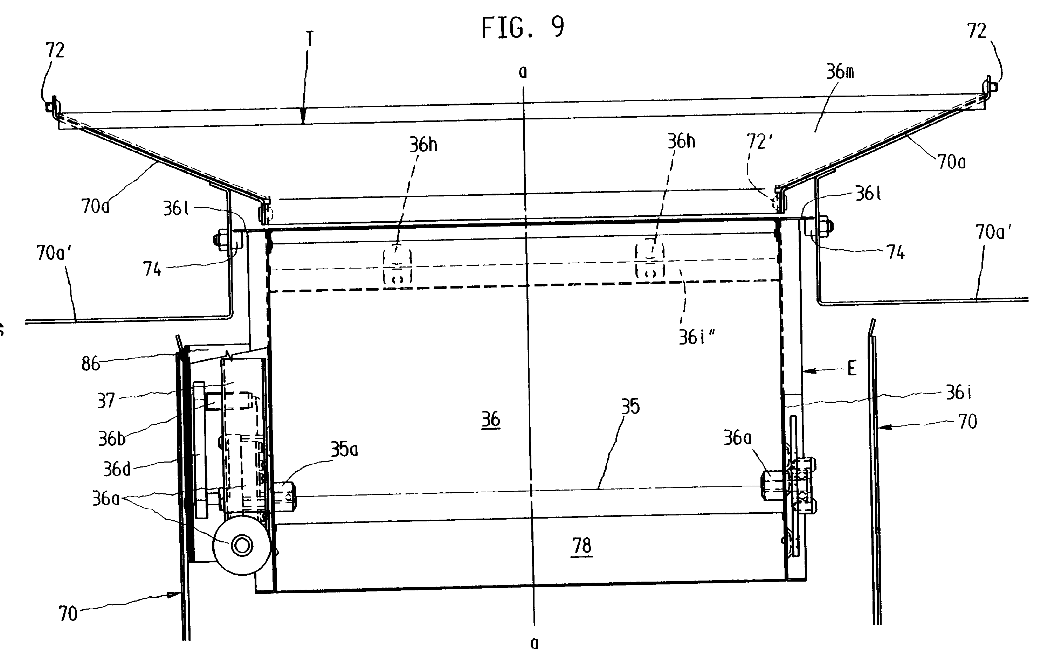

Die in der Formschließeinheit F (Fig. 1) aufgenommene Spritzgießform 13 ist mit einer Auswerfereinrichtung zum zeitlich aufeinanderfolgenden Auswerfen von brauchbaren Spritzteilen 73 und Schlechtteilen 73' einerseits und von Angußteilen 73" (Fig. 6) andererseits versehen. Im Maschinenständer M ist unter der Spritzgießform 13 eine Sortiereinrichtung angeordnet. Diese umfaßt eine auf einer horizontalen Achse 35 verschwenkbare Platte mit Rutschflächen auf beiden Seiten. Die Platte dient dem Absondern der Schlechtteile 73' und der Angußteile 73" von den brauchbaren Spritzteilen 73. Die als bauliche Einheit (Sortiereinheit E) ausgebildete Sortiereinrichtung umfaßt ferner eine motorische Verschwenkeinrichtung 36a, 36d zum Verschwenken der Platte im zeitlichen Intervall zwischen dem Auswerfen der brauchbaren Teile 73 und dem Auswerfen der Schlechtteile 73' bzw. Angußteile 73" in zwei Schrägpositionen. Von diesen wird im folgenden die eine als Gutteilposition (Fig. 7) und die andere als Schlechtteilposition (Fig. 1, 4, 6) bezeichnet. In den Schrägpositionen rutschen die Spritzteile auf der jeweils oberen Rutschfläche der Platte 36 zur räumlichen Trennung in entgegengesetzter Richtung. Die Sortiereinheit E ist mit einem Gehäuse 36i, versehen und als funktionsfähiges Gerät aus dem Maschinenständer M herausnehmbar. Sie kann bei senkrecht zur Symmetrieebene b-b der Spritzgießmaschine verlaufender Schwenkachse 35 in den quaderförmigen Maschinenständer M eingelegt sein. Das Gehäuse 36i besteht aus zwei die Schwenklager 35a für die Platte 36 tragenden, vertikalen und parallelen Wandungen 36i' sowie aus zwei diese Wandungen 36i' oben verbindenden Profilschienen 36i" und aus einem die Wandungen 36i' unten verbindenden Winkelblech 78. Die Platte 36 erstreckt sich fast vollständig auf der einen Seite der sie tragenden Schwenkachse 35. Die Rutschflächen der Platte sind durch die Oberflächen des symmetrisch zur Schwenkachse 35 angeordneten Winkelbleches 78 verlängert. Die Wandungen 36i' sind an ihrem oberen Rand je zur Bildung eines Auflagerandes 36 l horizontal umgebördelt. Über die Auflageränder 36 l liegt die Sortiereinheit E auf stationären Stützelementen 74 auf. Wie insbesondere aus Figur 9 in Verbindung mit den Figuren 6-8 ersichtlich, sind diese Stützelemente 74 an vertikalen Schenkeln von Abstützblechen 70a' aneinandergereiht. Die Abstützbleche 70a' sind fest mit einem stationären Trichter T verbunden. Dieser ist durch Bleche 70a, 36 m mit Hilfe von Befestigungselementen 72' gebildet und mittels weiterer Befestigungselemente 72 an den Rändern 18e des Maschinenständers M befestigt. Mit 36h sind Abstützelemente für die Platte 36 bezeichnet. Besonderheiten des ersten Ausführungsbeispieles gemäß den Fign. 1-9 sind :

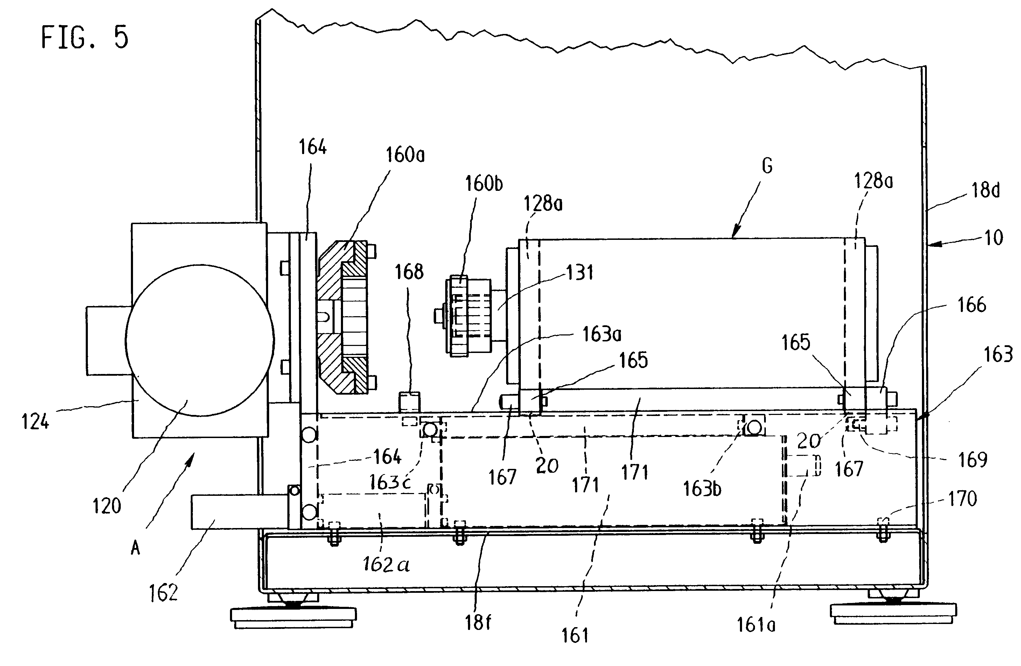

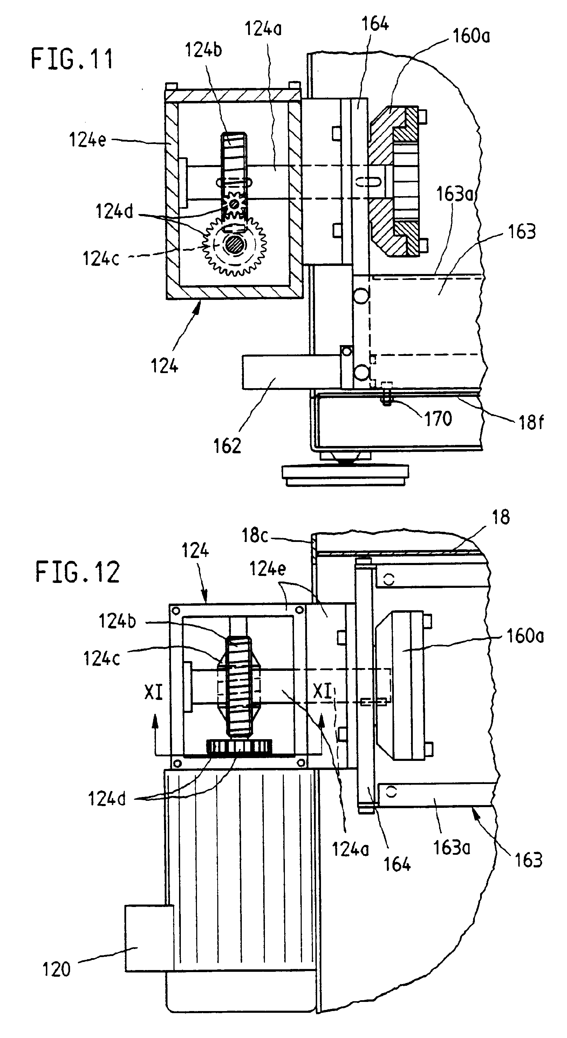

Der Sortiereinheit ist ein die Spritzteile 73 parallel (Fig. 13) zur Symmetrieebene b-b förderndes Transportband 17 zugeordnet. Dieses ist mit seinem Gestell 17b als bauliche Einheit aus dem Maschinenständer M herausnehmbar bzw. einfügbar. Die Zerkleinerungseinrichtung ist aus einer Motor-Getriebe-Einheit A und einem als bauliche Einheit ausgebildeten Schneidwerk G aufgebaut. Nach Lösen der Befestigungsschrauben 170 ist die Motor-Getriebe-Einheit über die Herausnahmeöffnung 10 bzw. 76 aus dem Maschinenständer herausnehmbar. Das Schneidwerk G ist mit der Motor-Getriebe-Einheit A mittels Steckkupplung gekuppelt. Wird das Schneidwerk G nach Lösen einer Sicherungsschraube 169 (Fig. 5) axial bewegt, so wird die Kupplung zur Motor-Getriebe-Einheit automatisch aufgehoben. Die Motor-Getriebe-Einheit A weist im Ausführungsbeispiel der Figuren 1-12 einen außerhalb des Maschinenständers M befindlichen Motor-Getriebe-Block auf. Dieser ist über einen Fuß 163 auf dem durch ein Bodenblech 18f gebildeten Boden des Maschinenständers M abgestützt. Das Schneidwerk G ist bei seiner Entkupplungsbewegung auf dem Fuß 163 geführt und auf diesem in Arbeitsposition zentrier- und arretierbar. Der Motor-Getriebe-Block weist einen senkrecht zur Schneidwerkachse 131 stehenden Motor 120 und ein Getriebe 124* auf. Das Getriebe 124 umfaßt ein Schneckengetriebe mit koaxial zur Schneidwerkachse verlaufender Antriebswelle 124a. Diese ist mit einer Kupplungsmuffe 160a versehen. Die Schneidwerkachse 131 endet in einem Zahnkranz 160b. Dieser korrespondiert als Steckkupplungsteil mit der Kupplungsmuffe 160a (Fig. 5, 11, 12). Die Schnecke 124c wird über Zahnräder 124d angetrieben. Das Schneckenrad 124b sitzt auf der Antriebswelle 124a.

* mit Gehäuse 124e

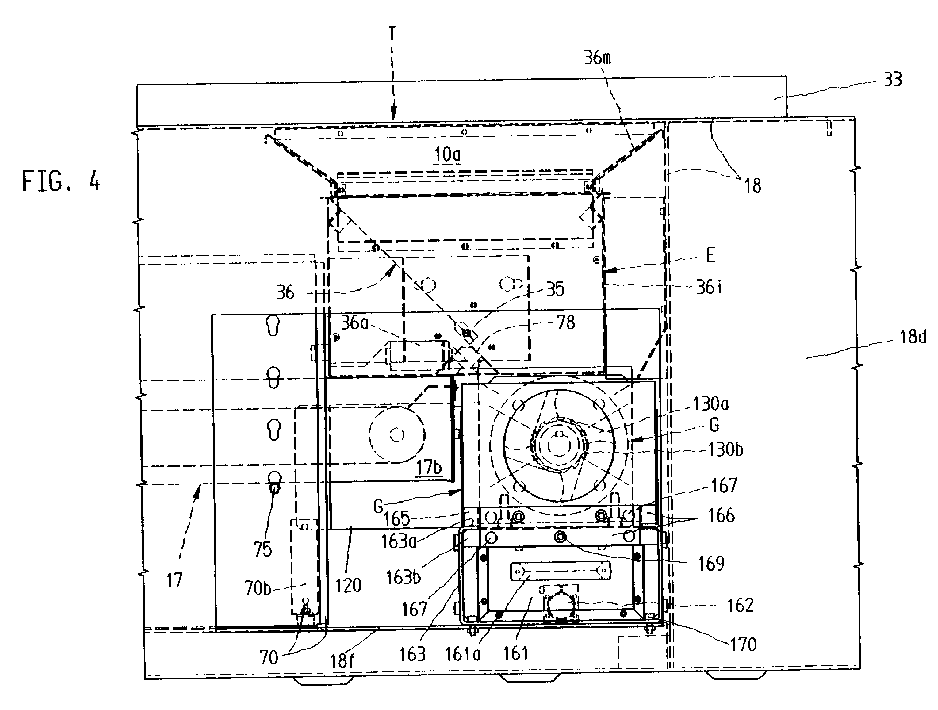

Wie insbesondere aus den Figuren 5-7, 11 erkennbar, ist der Fuß 163 durch ein U-förmig gebogenes Blech gebildet, dessen vertikale Schenkel entlang ihrer oberen Ränder horizontal eingebogen sind, um schienenartige Auflageflächen 163a für das Schneidwerk G zu bilden. Auf den Auflageflächen 163a ist das Schneidwerk mittels Querbalken 165 abgestützt und axial geführt, wobei vertikale Führungskanten 20 (Fig. 5-7) der Querbalken 165 an den Schnittkanten 19 (Fig. 6, 7, 12) der die Auflageflächen 163a bildenden Ränder des Fußes 163 gleiten. Das Schneidwerk G ist über eine am Querbalken 165 befestigte Befestigungsleiste 166 mittels Arretierschraube 169 an einer am Fuß 163 befestigten Arretierleiste 163b arretierbar, wie insbesondere aus den Fign. 4, 5 ersichtlich. Zur Zentrierung des Schneidwerkes G in Arbeitsposition tauchen Zentrierbolzen 167 des motorseitigen Querbalkens 165 bzw. der Befestigungsleiste 166 in Zentrierbohrungen einer stationären Zentrierleiste 168 bzw. der Arretierleiste 163b ein. Der Mahlgutbehälter 161 ist mittels Handgriff 161a aus dem offenen Fuß 163 herausziehbar bzw. in diesen einschiebbar. Beim Einschieben taucht ein Anschlußstutzen 162a des Mahlgutbehälters 161 dichtend in ein an der Motor-Getriebe-Einheit A befestigtes Absaugrohr 162 ein. Zur Bildung eines für die Absaugung des Mahlgutes ausreichenden Unterdruckes bilden die Innenräume des Schneidwerkes G und des Mahlgutbehälters 161 einen gemeinsamen Unterdruckraum, der mittels streifenförmigen Deckblechen 171, dem Querbalken 165, der Arretierleiste 163b und einer Versteifungsleiste 163c einigermaßen abgedichtet ist.

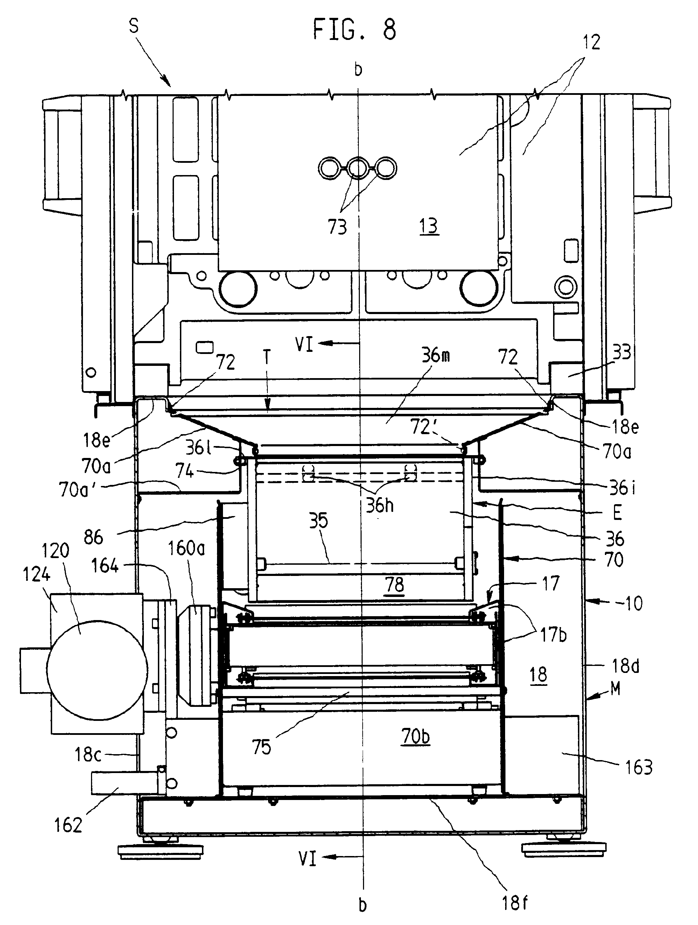

Der Motor-Getriebe-Block und der Fuß 163 der Motor-Getriebe-Einheit A sind über eine vertikale Befestigungsplatte 164 (Fig. 8) miteinander verbunden. Die Befestigungsplatte 164 ist derart formschlüssig in das U-förmige Blech des Fußes 163 eingefügt, daß es mit seinen Schmalkanten sowohl am horizontalen Steg, als auch an den vertikalen Schenkeln dieses Bleches formschlüssig anliegt. Der Motor-Getriebe-Block ist von der Befestigungsplatte 164 frei getragen.

Die Längswand 18c des Maschinenständers M ist im Bereich der Zerkleinerungseinrichtung mit einer Ausnehmung 10 versehen, durch welche sowohl das Schneidwerk G als auch die Motor-Getriebe-Einheit A nach Lösen der Befestigungsschrauben 170 aus dem Maschinenständer M herausgenommen werden kann. Das mit Gestell 17b versehene Transportband 17 ist über die stirnseitige Austragsöffnung 76 (Fig. 1, 3) aus dem Maschinenständer M herausnehmbar. Nach Herausnahme des Transportbandes 17 ist auch die Sortiereinheit E als funktionsfähiges Gerät über diese Austragsöffnung 76 oder aber über die Herausnahmeöffnung 10 in der Längswand 18c herausnehmbar.

Auf der Schneidwerkachse 131 des auf eine Umdrehungszahl von 20 bis 25 Umdrehungen pro Minute ausgelegten Schneidwerkes G sind zwei große Schneidmesser 130a zum Zerbrechen großer Kunststoffteile und im übrigen kleine Schneidmesser 130b angeordnet. Der Abstand der großen Schneidmesser 130a von den Lagerflanschen 128a entspricht deren gegenseitigem Abstand. Alle Schneidmesser 130a, 130b arbeiten mit den stationären Gegenschneiden von diametral angeordneten Gegenschneidblöcken 133 zusammen.

Beim Rotieren durchlaufen die Schneidmesser 130a, 130b Ringkanäle der Gegenschneidblöcke.

Das vom Schneidwerk zerbrochene, zerkleinerte und zermahlene Material gelangt aus dem Schneidwerk G in den Mahlgutbehälter 161, um von dort über das Absaugrohr 162 abgesaugt zu werden.

Im Ausführungsbeispiel der Figuren 1-9 stehen die Schwenkachse 35 der Sortiereinheit E und die Schneidwerkachse 131 des Schneidwerkes G je senkrecht zur Symmetrieebene b-b. Das die Spritzteile 73 parallel zur Symmetrieebene b-b fördernde Transportband 17 ist über die stirnseitige Austragöffnung 76 aus dem Maschinenständer herausnehmbar. Das symmetrisch zur Symmetrieebene b-b angeordnete Schneidwerk G ist über die Herausnahmeöffnung 10 der Längswand 18c aus dem Maschinenständer M herausnehmbar. Der Motor-Getriebe-Block der Motor-Getriebe-Einheit A liegt außerhalb des Maschinenständers M.

Ein weiteres Ausführungsbeispiel ist in Fig. 13 verdeutlicht : Bei diesem Ausführungsbeispiel sind Zerkleinerungseinrichtung und Sortiereinheit im Vergleich zum Ausführungsbeispiel der Fig. 1-9 in einer um 90° gedrehten Position im Maschinenständer M angeordnet. Demzufolge liegen die Schwenkachse 35 und die Schneidwerkachse 131 parallel zur Symmetrieebene b-b. Das die Spritzteile senkrecht zur Symmetrieebene b-b fördernde Transportband 17′ ist über eine Herausnahmeöffnung 76′ in der Längswand 18d aus dem Maschinenständer M herausnehmbar. Hingegen ist das Schneidwerk G, wie im Beispiel der Fign. 1-9 über die Herausnahmeöffnung 10 in der Längswand 18c aus dem Maschinenständer M herausnehmbar, dies allerdings bei parallel zur Symmetrieebene b-b stehender Schneidwerkachse 131 und erst nach einer kurzen axialen Bewegung zur Entkupplung. Nach Lösen der Befestigungsschrauben 170 kann auch die Motor-Getriebe-Einheit A mit Fuß 163 über die Herausnahmeöffnung herausgenommen bzw. eingefügt werden.

Die räumliche Lage der Sortiereinheit E mit Gehäuse 36i, Platte 36 und Schwenkachse 35 ist in Fig. 13 durch unterbrochene Linienführung angedeutet.

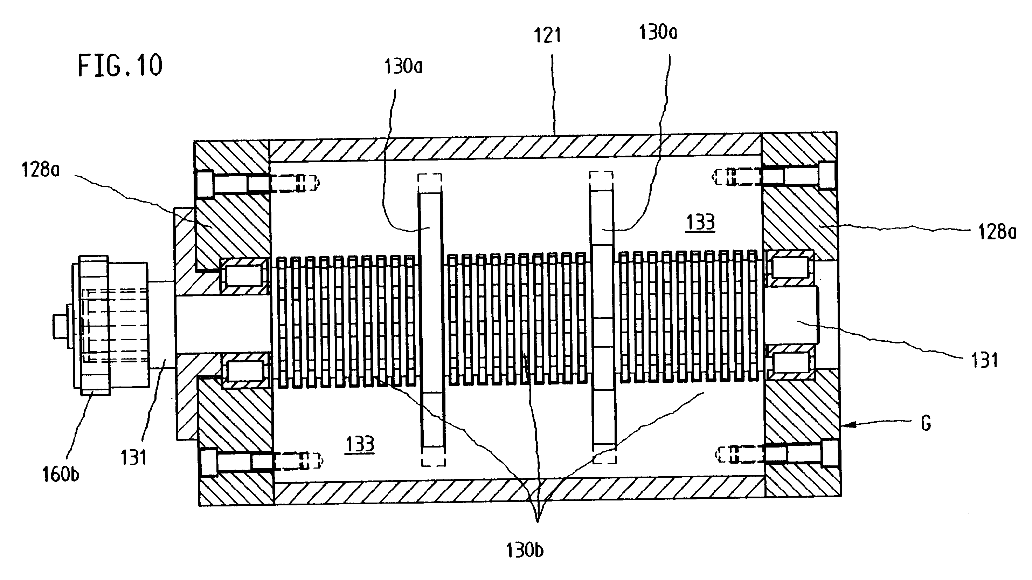

In der Serienfertigung ist die bedarfsweise Auslieferung der Spritzgießmaschine in den beiden Varianten (Fig. 1-9 bzw. Fig. 13) ohne nennenswerten zusätzlichen Aufwand möglich, denn die beiden Varianten unterscheiden sich im wesentlichen nur durch eine unterschiedliche Anordnung des Motor — Getriebe — Blockes, der in einem Falle am linken Lagerflansch (Fig. 10), im anderen Falle am rechten Lagerflansch 128a des Schneidwerkes liegt. Ferner dadurch, daß im Ausführungsbeispiel der Fig. 13 die Sortiereinheit nicht über die Auflageränder 361 der Wandungen 36i′, sondern über Lagerorgane der Profilschienen 36i″ des Gehäuses 36i auf den stationären Stützelementen 74 aufliegt. In beiden Ausführungsbeispielen tauchen die Stützelemente 74 zur Arretierung der Sortiereinheit in Ausnehmungen des Auflagerandes 361 bzw. der Lagerorgane der Profilschienen 36i″ ein. Bei Herausnehme der Sortiereinheit E wird diese daher zur Freisetzung leicht angehoben, danach zunächst aus dem Bereich der Stützelemente 74 parallel zur Symmetrieebene b-b bewegt und danach über die Herausnahmeöffnung 76 oder die Herausnahmeöffnung 10 aus dem Maschinenständer M herausgenommen. Schließlich ist darauf hinzuweisen, daß bei beiden Varianten die in der Beschreibungseinleitung (S.3, Z. 13-22) genannten Automatisierungsgrade gleichermaßen realisierbar und ineinander überführbar sind. In

EP 0 359 012 B1

beiden Varianten ist das Schneidwerk symmetrisch zur Mittelebene a-a (Fig. 9, 13) der Sortiereinheit E angeordnet, so daß bei einem einfachen Aufbau der Zerkleinerungseinrichtung eine raumsparende Zuordnung von Sortiereinheit und Zerkleinerungseinrichtung möglich ist, gemäß welcher die Spritzteile unmittelbar in das Schneidwerk fallen können, ohne daß es eines Quertransportes der Spritzlinge bedarf.

**Patentansprüche**

1. Kunststoff-Spritzgießmaschine mit einer Spritzgießeinheit (S) und einer Formschließeinheit (F) auf einem Maschinenständer (M) mit etwa rechteckiger Stellfläche,
mit einer für ein zeitlich aufeinanderfolgendes Auswerfen brauchbarer Spritzteile (73) und der Angußteile (73'') eingerichteten Spritzgießform (13),
mit einer unter der Spritzgießform angeordneten Sortiereinrichtung mit verschwenkbarer Platte (36), die mittels einer motorischen Verschwenkeinrichtung (36a ; 36d) in zwei Schrägpositionen (Gutteilposition und Schlechtteilposition) verschwenkbar ist, in welchen die brauchbaren Spritzteile (73) und die nicht brauchbaren Teile (73' ; 73'') in entgegengesetzter Richtung auf der Platte (36) abrutschen,
mit einer die Spritzteile (73) aufnehmenden Einrichtung, über welcher die in Gutteilposition befindliche Platte (36) mündet, sowie mit einer Zerkleinerungseinrichtung mit Antriebsmotor (120), Getriebe (124), Schneidwerk mit Schneidwerkachse (131) und Malgutbehälter (161), über welcher Zerkleinerungseinrichtung die in Schlechtteilposition befindliche Platte (36) mündet, dadurch gekennzeichnet, daß die Zerkleinerungseinrichtung aus einem als bauliche Einheit aus dem Maschinenständer (M) herausnehmbaren Schneidwerk (G) und aus einem außerhalb der Vertikalprojektion des Schneidwerkes (G) angeordneten Motor-Getriebe-Block (120, 124) einer Motor-Getriebe-Einheit (A) aufgebaut und die Sortiereinrichtung als eine bauliche, mit Gehäuse (36i) versehene und als solche funktionsfähige Einheit (Sortiereinheit E) ausgebildet und aus dem Maschinenständer (M) herausnehmbar ist.

2. Kunststoff-Spritzgießmaschine nach Anspruch 1, dadurch gekennzeichnet, daß das mit der Motor-Getriebe-Einheit (A) mittels Steckkupplung gekuppelte und über eine Herausnahmeöffnung (10 bzw. 76) aus dem Maschinenständer (M) herausnehmbare Schneidwerk (G) durch die Herausnahmebewegung von der Motor-Getriebe-Einheit (A) abkuppelbar und das Schneidwerk symmetrisch zu einer vertikalen Mittelebene (a-a in Fig. 9, 13) der Sortiereinheit (E) angeordnet ist.

3. Kunststoff-Spritzgießmaschine nach Anspruch 1 oder 2, dadurch gekennzeichnet, daß die Motor-Getriebe-Einheit (A) einen außerhalb der Vertikalprojektion des Schneidwerkes (G) befindlichen Motorgetriebeblock aufweist, der über seinen Fuß (163) auf dem Boden des Maschinenständers (M) abgestützt ist, und daß das Schneidwerk (G) bei seiner Herausbewegung aus dem Maschinenständer (M) auf dem Fuß (163) führbar und in Arbeitsposition zentrier- und arretierbar ist.

4. Kunststoff-Spritzgießmaschine nach einem der Ansprüche 1 bis 3, dadurch gekennzeichnet, daß der Motor-Getriebe-Block einen senkrecht zur Schneidwerkachse (131) stehenden Motor und ein Schnekkengetriebe mit koaxial zur Schneidwerkachse (131) verlaufender Antriebswelle (124a) aufweist, die mit einer Kupplungsmuffe (160a) versehen ist und daß die Schneidwerkachse (131) in einem Zahnkranz (160b) endet, der als Steckkupplungsteil mit der Kupplungsmuffe (160a) korrespondiert (Fig. 5, 11, 12).

5. Kunststoff-Spritzgießmaschine nach einem der vorhergehenden Ansprüche, dadurch gekennzeichnet, daß auf der Schneidwerkachse (131) des auf eine Umdrehungszahl von 20 bis 25 Umdrehungen pro Minute ausgelegten Schneidwerkes (G) wenigstens zwei große Schneidmesser (130a) zum Zerbrechen großer Kunststoffteile und im übrigen kleine Schneidmesser (130b) angeordnet sind, wobei der Abstand der großen Schneidmesser (130a) von den Lagerflanschen (128a) des Schneidwerkes (G) deren gegenseitigem Abstand entspricht und alle Schneidmesser (130a, 130b) mit stationären Gegenschneiden von diametral angeordneten Gegenschneidblöcken (133) zusammenarbeiten.

6. Kunststoff-Spritzgießmaschine nach einem der vorhergehenden Ansprüche, dadurch gekennzeichnet, daß die Platte (36) der Sortiereinheit (E) nahezu vollständig auf der einen Seite der sie tragenden Schwenkachse (35) angeordnet und die Rutschflächen der Platte (36) durch die Oberflächen eines symmetrisch zur Schwenkachse (35) angeordneten Winkelblechs (78) verlängert sind.

7. Kunststoff-Spritzgießmaschine nach Anspruch 6, dadurch gekennzeichnet, daß das Gehäuse (36i) der Sortiereinheit (E) aus zwei die Schwenklager (35a) für die Platte (36) tragende, vertikale und parallele Wandungen (36i') mit horizontalen Stützrändern (361), ferner aus zwei die Wandungen (36i') oben verbindenden Profilschienen (36i'') und aus dem die Wandungen (36i') unten verbindenden Winkelblech (78) besteht und daß die Sortiereinheit (E) über die Auflageränder (361) auf stationären Stützelementen (74) aufliegt.

8. Kunststoff-Spritzgießmaschine nach einem der vorhergehenden Ansprüche, dadurch gekennzeichnet, daß die Schwenkachse (35) der Sortiereinheit (E) und die Schneidwerkachse (131) des Schneidwerkes (G)

6

senkrecht zur Symmetrieebene (b-b) der Kunststoff-Spritzgießmaschine stehen, wobei ein die Spritzteile (73) parallel zur Symmetrieebene (b-b) förderndes Transportband (17) als funktionsfähige bauliche Einheit über eine stirnseitige Austragöffnung (76) für die Spritzteile (73) und das symmetrisch zur Symmetrieebene (b-b) angeordnete Schneidwerk (G) über eine Herausnahmeöffnung (10) der Längswand (18c) aus dem Maschinenständer (M) herausnehmbar sind und wobei der Motor-Getriebe-Block der Motor-Getriebe-Einheit (A) der Zerkleinerungseinrichtung außerhalb des Maschinenständers (M) liegt.

9. Kunststoff-Spritzgießmaschine nach Anspruch 8, dadurch gekennzeichnet, daß das Transportband (17) zwischen zwei parallelen und vertikalen Leitblechen (70) auf horizontalen Stangen (75) aufgenommen ist, welche Leitbleche (70) mittels Querblechen (70b) ein im Maschinenständer (M) begrenzt verschiebbares Trägeraggregat bilden (Fig. 6-8).

10. Kunststoff-Spritzgießmaschine nach einem der Ansprüche 1 bis 7, dadurch gekennzeichnet, daß die Schwenkachse (35) der Sortiereinheit (E) und die Schneidwerkachse (131) des Schneidwerkes (G) parallel zur Symmetrieebene (b-b) der Kunststoff-Spritzgießmaschine stehen, wobei das Förderband (17') über eine Herausnahmeöffnung (76') der Längswand (18d) aus dem Maschinenständer (M) herausnehmbar ist.

## Claims

1. Plastic injection moulding machine with an injecting unit (S) and a clamping unit (F) on a machine pedestal (M) with a substantially rectangular charging surface, comprising
an injection mould (13) arranged for consecutively ejecting usable mouldings (73) and sprues (73″),
sorting means, arranged under the injection mould, having a swivel plate (36), which is swivelable into two inclined positions (good parts position and bad parts position) by means of a motor-operated swivel drive (36a ; 36d), in which positions the usable mouldings and the useless rejects and sprues (73′ ; 73″) slide off the plate (36) in opposite directions,
means for receiving the mouldings (73), over which the plate (36) in its good part position opens out, and a disintegrator means with a drive motor (120), a transmission (124), a cutting mechanism with a cutting drive shaft (131) and a container (161), over which disintegrator means the plate (36) in its bad part position opens out, characterized in that the disintegrator means is made up from a cutting mechanism (G), that is designed so as to be removable as one unit from the machine pedestal (M), and from a motor transmission block (120, 124) of a motor transmission unit (A), which block is disposed outside the vertical projection of the cutting mechanism (G), and the sorting means is designed as one single unit (sorting unit E) provided with a housing (36i) and functioning correspondingly and is removable from the machine pedestal (M).

2. Plastic injection moulding machine according to claim 1, characterized in that the cutting mechanism (G), which is coupled to the motor transmission unit (A) by means of a plug coupling and is removable from the machine pedestal (M) via an exit opening (10 or 76), is uncouplable by lifting out the motor transmission unit (A) and the cutting mechanism is disposed symmetrically to a vertical middle plane (a-a in Figures 9, 13) of the sorting unit (E).

3. Plastic injection moulding machine according to claims 1 or 2, characterized in that the motor transmission unit (A) has a motor transmission block disposed outside the vertical projection of the cutting mechanism (G), which motor transmission block is supported by its leg (163) on the floor of the machine pedestal (M), and in that the cutting mechanism (G) is guidable on the leg (163) when it is removed from the machine pedestal (M) and can be centred and locked in the working position.

4. Plastic injection moulding machine according to one of the claims 1 to 3, characterized in that the motor transmission block has a motor standing at right angles to the cutting drive shaft (131) and a worm gear with an output shaft (124a) which extends coaxially to the cutting drive shaft (131) and is provided with a coupling socket (160a) and in that the cutting drive shaft (131) is terminated by a gear (160b) that corresponds as a plug-coupling member with the coupling socket (160a) (Figures 5, 11, 12).

5. Plastic injection moulding machine according to one of the preceding claims, characterized in that at least two large cutters (130a) for disintegrating large plastic pieces and also small cutters (130b) are disposed on the drive shaft (131) of the cutting mechanism (G), which is designed to operate at a speed of 20 to 25 revolutions per minute, whereby the distance from the large cutters (130a) to the bearing flanges (128a) of the cutting mechanism (G) corresponds to the distance by which the large cutters are spaced apart and all cutters (130a, 130b) cooperate with stationary knife edges of diametrically disposed cutter blocks (133).

6. Plastic injection moulding machine according to one of the preceding claims, characterized in that the plate (36) of the sorting unit (E) is arranged almost totally on the one side of the swivel shaft (36) carrying it and the sliding surfaces of the plate (36) are extended by the surfaces of an angle plate (78) arranged symmetrically to the swivel shaft (36).

7. Plastic injection moulding machine according to claim 6, characterized in that the housing (36i) of the sorting unit (E) comprises two vertical and parallel walls (36i′), which carry the swivel bearings (35a) for the plate (36), which walls (36i′) have horizontal supporting flanges (361), and additionally two section bars (36″) connecting the walls (36′) above and the angle plate (78) connecting the walls (36′) below and in that the sorting unit (E) is supported by the supporting flanges (361) on stationary supporting elements (74).

8. Plastic injection moulding machine according to one of the preceding claims, characterized in that the swivel shaft (35) of the sorting unit (E) and the drive shaft (131) of the cutting mechanism (G) are disposed vertical to the plane of symmetry (b-b) of the plastic injection moulding machine, whereby a belt conveyor (17), which conveys the mouldings (73) parallel to the plane of symmetry (b-b), is removable from the machine pedestal (M) as one operable unit via a frontal exit opening (76) for the mouldings (73) and the cutting mechanism (G), which is arranged symmetrically to the plane of symmetry (b-b), is removable from the machine pedestal (M) via an exit opening in the longitudinal wall (18c), and whereby the motor transmission block of the motor transmission unit (A) of the crushing means is disposed outside the machine pedestal (M).

9. Plastic injection moulding machine according to claim 8, characterized in that the belt conveyor (17) is received between two parallel and vertical sheet metal elements (70) on horizontal bars (75), which sheet metal elements (70) form by means of cross plates (70b) a displaceable carrier unit defined in the machine pedestal (M) (Figures 6-8).

10. Plastic injection moulding machine according to one of the claims 1 to 7, characterized in that the swivel shaft (35) of the sorting unit (E) and the drive shaft (131) of the cutting mechanism (G) are parallel to the plane of symmetry (b-b) of the plastic injection moulding machine, whereby the belt conveyor (17′) is removable from the machine pedestal (M) via an exit opening (76′) in the longitudinal wall (18d).


**Revendications**

1. Machine de moulage de matières plastiques par injection, comprenant un dispositif (S) de coulée par injection et un dispositif (F) de fermeture de moules, sur un bâti (M) à surface réceptrice sensiblement rectangulaire ;
un moule (13) de coulée par injection, agencé pour éjecter des pièces moulées utilisables (73) et les carottes (73″) selon une succession chronologique ;
un dispositif de triage, installé au-dessous du moule de coulée par injection et présentant une plaque pivotante (36) pouvant pivoter, au moyen d'un mécanisme motorisé de pivotement (36a ; 36d), jusqu'à deux positions inclinées (position des pièces conformes et position des pièces non conformes) dans lesquelles les pièces moulées utilisables (73) et les pièces inutilisables (73′ ; 73″) glissent, sur la plaque (36), dans des directions opposées ;
un dispositif recevant les pièces moulées (73), et au-dessus duquel débouche la plaque (36) occupant la position des pièces conformes ;
ainsi qu'un dispositif de fragmentation comprenant un moteur d'entraînement (120), une transmission (124), un mécanisme de sectionnement présentant un axe (131) et un réceptacle (161) de matière broyée, dispositif de fragmentation au-dessus duquel débouche la plaque (36) occupant la position des pièces non conformes, caractérisée par le fait que le dispositif de fragmentation se compose d'un mécanisme de sectionnement (G) pouvant être extrait du bâti (M) de la machine, en tant qu'ensemble structurel unitaire, et d'un bloc moteur-transmission (120, 124) d'une unité moteur-transmission (A), disposé à l'extérieur de la projection verticale du mécanisme de sectionnement (G) ; et le dispositif de triage est réalisé sous la forme d'une unité structurelle (unité de triage E) qui est pourvue d'un carter (36i) et est par elle-même fonctionnelle, et peut être extrait du bâti (M) de la machine.

2. Machine de moulage de matières plastiques par injection, selon la revendication 1, caractérisée par le fait que le mécanisme de sectionnement (G), accouplé à l'unité moteur-transmission (A) au moyen d'un accouplement emboîtable, et pouvant être extrait du bâti (M) de la machine par l'intermédiaire d'un orifice d'extraction (10, respectivement 76), peut être désaccouplé de l'unité moteur-transmission (A) suite au mouvement d'extraction ; et le mécanisme de sectionnement est disposé symétriquement par rapport à un plan médian vertical (a-a sur les figures 9, 13) de l'unité de triage (E).

3. Machine de moulage de matières plastiques par injection, selon la revendication 1 ou 2, caractérisée par le fait que l'unité moteur-transmission (A) présente un bloc moteur-transmission qui est situé à l'extérieur de la projection verticale du mécanisme de sectionnement (G) et prend appui, par l'intermédiaire de sa base (163), sur le fond du bâti (M) de la machine ; et par le fait que le mécanisme de sectionnement (G) peut être guidé sur la base (163) lors de son mouvement d'extraction hors du bâti (M) de la machine, et peut être centré et arrêté en position de travail.

4. Machine de moulage de matières plastiques par injection, selon l'une des revendications 1 à 3, caractérisée par le fait que le bloc moteur-transmission comprend un moteur agencé perpendiculairement à l'axe (131) du mécanisme de sectionnement, ainsi qu'une transmission à vis sans fin munie d'un arbre d'entraînement (124a) qui s'étend coaxialement à l'axe (131) du mécanisme de sectionnement, et est équipé d'un manchon d'accouplement (160a) ; et par le fait que l'axe (131) du mécanisme de sectionnement s'achève par une couronne dentée (160b) qui correspond, en tant que pièce d'accouplement emboîtable, audit manchon d'accouplement (160a) (figures 5, 11, 12).

5. Machine de moulage de matières plastiques par injection, selon l'une des revendications précédentes, caractérisée par le fait qu'au moins deux grandes lames de coupe (130a) destinées à rompre de grandes pièces en matière plastique et, par ailleurs, de petites lames de coupe (130b) sont disposées sur l'axe (131) du mécanisme de sectionnement (G) conçu pour une vitesse angulaire de 20 à 25 tours par minute ; machine dans laquelle la distance, comprise entre les grandes lames de coupe (130a) et les ailes de montage (128a) du mécanisme de sectionnement (G), correspond à la distance mutuelle entre lesdites ailes, et toutes les lames de coupe (130a, 130b) coopèrent avec des contre-lames fixes de blocs (133) de sectionnement complémentaire, agencés diamétralement.

6. Machine de moulage de matières plastiques par injection, selon l'une des revendications précédentes, caractérisée par le fait que la plaque (36) de l'unité de triage (E) est disposée, presque intégralement, sur l'un des côtés de l'axe de pivotement (35) qui la supporte ; et les surfaces de glissement de ladite plaque (36) sont prolongées par les faces supérieures d'une tôle (78) en cornière, agencée symétriquement par rapport à l'axe de pivotement (35).

7. Machine de moulage de matières plastiques par injection, selon la revendication 6, caractérisée par le fait que le carter (36i) de l'unité de triage (E) se compose de deux parois (36i') verticales et parallèles, qui portent les paliers de pivotement (35a) destinés à la plaque (36) et présentent des rebords horizontaux d'appui (36l), en outre de deux rails profilés (36i'') qui solidarisent lesdites parois (36i') en partie haute, ainsi que de la tôle (78) en cornière qui solidarise lesdites parois (36i') en partie basse ; et par le fait que l'unité de triage (E) repose, par l'intermédiaire des rebords d'appui (36l), sur des éléments fixes de soutien (74).

8. Machine de moulage de matières plastiques par injection, selon l'une des revendications précédentes, caractérisée par le fait que l'axe de pivotement (35) de l'unité de triage (E) et l'axe (131) du mécanisme de sectionnement (G) sont perpendiculaires au plan de symétrie (b-b) de ladite machine de moulage de matières plastiques par injection ; machine dans laquelle une bande transporteuse (17), convoyant les pièces moulées (73) parallèlement au plan de symétrie (b-b), peut être extraite, en tant qu'ensemble unitaire structurel fonctionnel, par l'intermédiaire d'un orifice frontal (76) d'évacuation des pièces moulées (73), et le mécanisme de sectionnement (G), agencé symétriquement par rapport au plan de symétrie (b-b), peut être extrait du bâti (M) de la machine par l'intermédiaire d'un orifice d'extraction (10) de la paroi longitudinale (18c) ; et dans laquelle le bloc moteur-transmission de l'unité moteur-transmission (A) du dispositif de fragmentation est situé à l'extérieur du bâti (M) de la machine.

9. Machine de moulage de matières plastiques par injection, selon la revendication 8, caractérisée par le fait que la bande transporteuse (17) est implantée, entre deux tôles de guidage (70) parallèles et verticales, sur des tiges horizontales (75), lesquelles tôles de guidage (70) forment, au moyen de tôles transversales (70b), un groupe de support pouvant effectuer un coulissement limité dans le bâti (M) de la machine (figures 6-8).

10. Machine de moulage de matières plastiques par injection, selon l'une des revendications 1 à 7, caractérisée par le fait que l'axe de pivotement (35) de l'unité de triage (E) et l'axe (131) du mécanisme de sectionnement (G) sont parallèles au plan de symétrie (b-b) de ladite machine de moulage de matières plastiques par injection, la bande convoyeuse (17') pouvant être extraite du bâti (M) de la machine par l'intermédiaire d'un orifice d'extraction (76') de la paroi longitudinale (18d).

FIG. 1

FIG. 2

FIG. 3

EP 0 359 012 B1

FIG. 4

11

EP 0 359 012 B1

FIG. 5

EP 0 359 012 B1

# FIG. 6

# FIG. 7

# FIG. 8

FIG. 9

FIG.10

EP 0 359 012 B1

FIG.11

FIG.12

# FIG. 13

EP 0 359 012 B1